# EUROPEAN PATENT SPECIFICATION

(11) **EP 2 116 784 B1**
(45) Date of publication and mention of the grant of the patent: **13.03.2013**
(21) Application number: 08700576.5
(22) Date of filing: 03.01.2008
(51) Int. Cl.: F24F 5/00, F24J 3/08

(54) **ENERGY STORAGE AND TEMPERATURE CHANGE TYPE AIR CONDITIONING METHOD WITH UNDERGROUND RESERVOIR AND WATER SOURCE HEAT PUMP, AND THE DEDICATED DEVICE THEREOF**
STROMSPARENDES TEMPERATURWECHSEL- UND KLIMAANLAGENVERFAHREN MIT UNTERIRDISCHEM RESERVOIR UND WASSERQUELLENWÄRMEPUMPE SOWIE ENTSPRECHENDE VORRICHTUNG
PROCÉDÉ DE CLIMATISATION DE TYPE À STOCKAGE D'ÉNERGIE ET VARIATION DE TEMPÉRATURE À L'AIDE D'UN RÉSERVOIR ENTERRÉ ET D'UNE POMPE À CHALEUR SUR BOUCLE D'EAU, AINSI QUE SON DISPOSITIF SPÉCIFIQUE

(30) Priority: 04.01.2007 CN 200710036201
(43) Date of publication of application: 11.11.2009
(73) Proprietor: Pan, Ge, Shanghai 200-030 (CN)
(72) Inventor: Pan, Ge, Shanghai 200-030 (CN)
(74) Representative: Mittler, Enrico
(86) International application number: PCT/CN2008/000016
(87) International publication number: WO 2008/083612

(56) References cited:
- CN-Y- 2 758 624
- CN-Y- 2 783 217
- CN-Y- 2 800 177
- US-A- 4 456 056
- US-A- 5 207 075
- US-B1- 6 233 951

## Description

### Field of the Present Invention

The present invention relates to a water-source heat pump, and more particularly to a variable temperature air-conditioning method using underground reservoir and water-source heat pump with energy-storage and its specialized equipment.

### Prior Art

Water-source heat pump is an effective energy-saving heating and cooling air-conditioning system for buildings by using low-ground heat including underground or surface water. The application of water-source heat pump technology has to be limited because of the following problems during the utilization of the underground and surface water. Well-drilling and underground recharge are high cost. The surface water is substantially subject to the environment temperature. Heat exchange affects the ecological environment.

A buried-tube type of water-source heat pump system is to bury tubes for exchanging heat from rock and soil to a thermal storage medium. The shallow-buried tubes will be greatly influenced by the surface temperature and solar radiation, so that the system has low stability. The deep-buried vertical tubes adopt high pressure polyethylene plastic U-shaped tube, so that the costs on related materials and ground-hole drilling are high. Besides, the buried-tube type of water-source heat pump system demands high quality heat exchanger and geological structure, has low energy level per unit in heat exchange, and has higher system investment than other types of water-source heat pump, so that it is generally applicable to residential buildings with small unit and low temperature control standard, and hardly applicable to large air-conditioning engineering with high temperature control stability and standard.

With the progress of the air-conditioning energy-saving technology, an air-conditioner with variable temperature that can output different temperature in different period is required due to the high requirement on temperature control stability and standard. The air-conditioner with variable temperature requires stable output temperature and reliable system operation. When main heating pump is faulty, the system still can assure the temperature control, which is applicable to high end hotel, artificial weather room, plant factory, farm green house and so on that require stable output temperature and reliable system operation, so that system requires reserve heat pump, which causes the increased power and investment.

Because the water-source heat pump outputs variable power at intervals, the present technology only provides air-conditioning energy by directly outputting energy through secondary cycling thermal storage medium, which means that the water-source heat pump can not store energy during the operation, so that reliable and stable constant output can not be realized to meet the requirement of energy-saving operation mode. In addition, low capacity and quick temperature changing of the present heat source result in large temperature variation and power consumption, so that the air-conditioning system with underground exchanger needs to increase the capacity of the underground and reduce the complexity and the occupation of the construction. And further more, a method to lower the water-source heat pump investment and improve the operating reliability has to be found.

US 6,233,951 B 1 discloses a heating, cooling and dehumidification system for buildings, and tries to protect a heat management system for a building.

However, US 6,233,951 B1 does not disclose any method using underground reservoir and water-source heat pump with energy-storage and its specialized equipment.

Therefore, US 6,233,951 B1 never discloses the solution of the present invention.

US 6,233,951 B1 even has no features that are also essential to realize the object of the present invention.

US 5 207 075 discloses the preamble of claim 5.

### Summary of the Present Invention

An object of the present invention is to provide a variable temperature air-conditioning method using underground reservoir and water-source heat pump with energy-storage, which can lower the investment and operating cost, increase the air-conditioning system efficiency and reliability, and realize a constant and even temperature output without intervals.

Accordingly, in order to accomplish the above object, the present invention provides an air-conditioning method using underground reservoir and water-source heat pump with energy-storage, the method comprising steps of (a) collecting energy from a underground reservoir via a water-source heat pump, (b) storing cool and warm energy in energy-storage water tanks respectively, and (c) exchanging energy between the energy-storage water tanks and air-conditioning load.

Each energy-storage water tank exchanges energy with an output of the water-source heat pump and a variable temperature air-conditioning load respectively.

The step (b) and step (c) are simultaneous or respective.

The energy exchanging between the energy-storage water tanks and air-conditioning load is constant without interval.

The present invention also provides an air-conditioning system according to claim 5.

A heat absorbing unit and a heat radiating unit are provided in said underground reservoir, which are optionally connected with said water-source heat pump respectively.

The underground reservoir is formed by trenchless explosion, or comprises buried pipes that are formed by trenchless horizontally directional drilling and pipe jacking.

The buried pipes is embodied as at least one selected from a group consisting of metal pipe, plastic pipe, glass-fiber pipe, and pre-made reinforced concrete pipe. The buried pipes comprise an inner casing and an outer casing, wherein a thermal insulation material is provided therebetween.

The underground reservoir comprises multi-layers in a longitudinal direction, wherein every two adjacent pipe casings have a spacing ranging from 3 m to 8 m.

These and other objectives, features, and advantages of the present invention will become apparent from the following detailed description, the accompanying drawings, and the appended claims.

### Brief Description of the Drawings

Fig. 1 is a schematic view of working flow of a variable temperature air-conditioning system utilizing underground reservoir and water-source heat pump with energy-storage according to a preferred embodiment of the present invention.
Fig. 2 is a schematic view of a system according to an embodiment of the present invention.
Fig. 3 is a schematic view of a system according to another embodiment of the present invention.
Fig. 4 is a schematic structural view of an underground reservoir that is formed by trenchless explosion according to an embodiment of the present invention.
Fig. 5 is a schematic structural view of an underground reservoir comprises buried pipes that is installed by trenchless horizontally directional drilling and pipe jacking according to an embodiment of the present invention.

### Detailed Description of the Preferred Embodiments

The present invention will be further illustrated according to its embodiments together with accompanying drawings.

Variable temperature air-conditioning system is an energy-saving technology that outputs variable temperature in different time segment according to the requirement. For example, in daylight, more energy is needed, while at night less energy is needed, or vise versa. In order to keep even temperature, a heat pump with maximum output and reserve heat pumps are needed to keep the system reliability, which is typically applied to agriculture buildings such as plant factory. The key to improve the system energy-storage is to lower the operating power consumption, and improve the reliability and temperature stability. By improving the system energy-storage, the number of the configured heat pumps and power can be reduced.

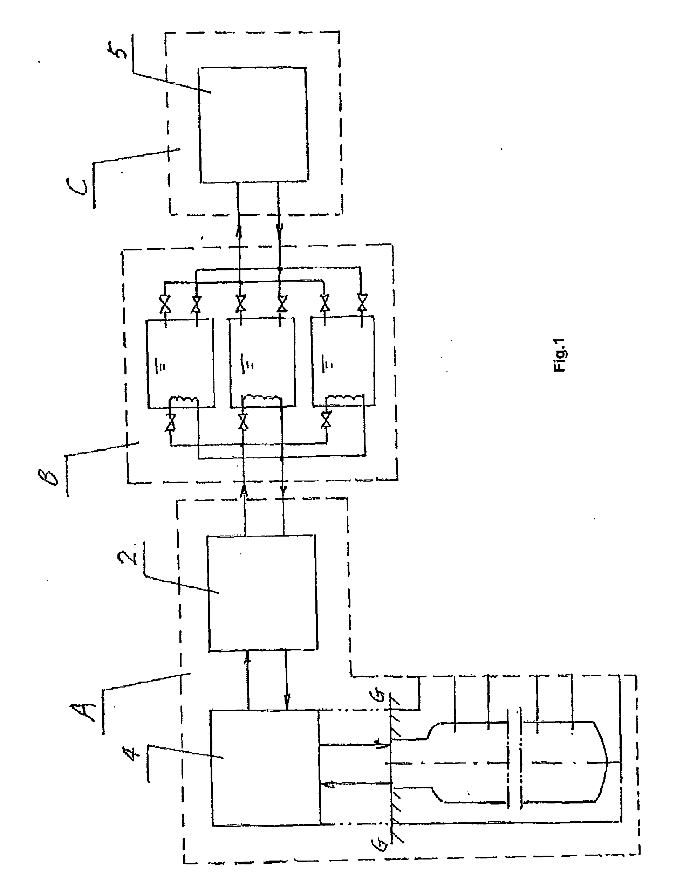

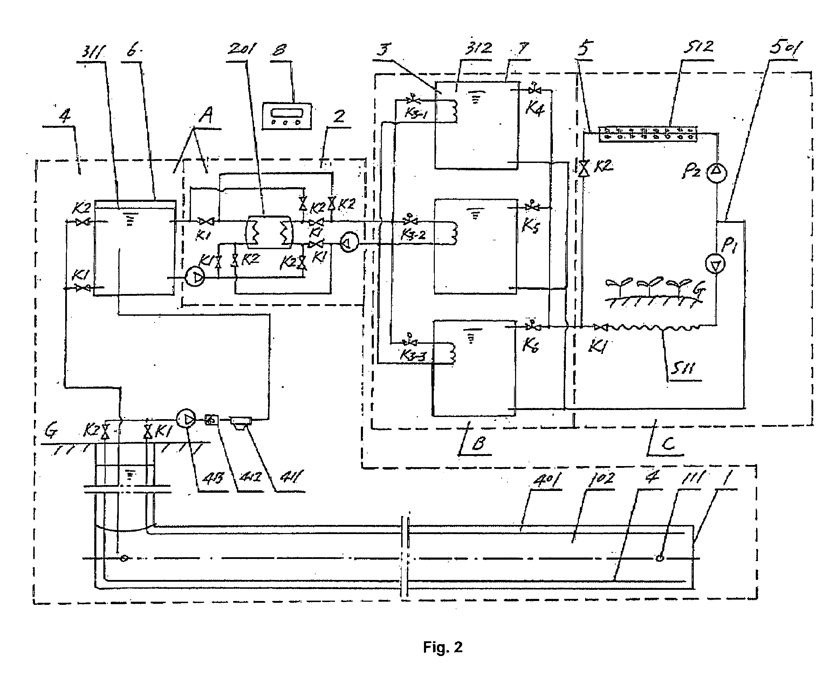

Referring to Figs. 1, 2, and 5 of the drawings, a variable temperature air-conditioning method using underground reservoir and water-source heat pump with energy-storage and its system applied to agriculture buildings or agriculture greenhouse are illustrated, in which the system comprises a underground reservoir 1, a water-source heat pump loop 2, a cycling thermal storage medium 3, a geothermal heat exchanging water supply cycling loop 4, an air-conditioning load loop 5, a working water tank 6, energy-storage water tanks B, a controller 8, and electric and manual reversing switch valves. Wherein the underground reservoir 1 includes a drilling and pipe jacking underground reservoir 102, a buried connecting pipe 111, an infiltration pipe 112, a maintenance hole 113, a thermal insulation layer 114, wherein the cycling thermal storage medium 3 includes a secondary cycling thermal storage medium 311 and a final cycling thermal storage medium 312; the electric and manual switch valves includes a heating cycling path switch valve K1, a cooling cycling path switch valve K2, energy-storage water tank input gating switch valves K3-1, K3-2, and K3-3, energy-storage water tank output gating switch valves K3-4, K3-5, and K3-6; the geothermal heat exchanging water supply cycling loop 4 includes the underground reservoir 1, a water supply pipe 401, a decontaminating device 411, a one-way valve 412, a water supply pump 413, a working water tank 6, electric and manual reversing switch valves. The water-source heat pump loop 2 includes at least one paralleled heat pump 201, at least two cycling transmission pumps and a plurality of switch valves, wherein a switchable water-source heat pump loop that can output heat or cool energy is formed among at least two cycling transmission pump, and a plurality of switch valves and heat pump 201. The energy-storage water tanks comprise one or more energy-storage water tanks 7. The energy-storage water tank input gating switch valves K3-1, K3-2, and K3-3, energy-storage water tank output gating switch valves K3-4, K3-5, and K3-6 and energy-storage water tanks are connected in parallel forming paralleled energy-storage water tanks B.

Air-conditioning load loop 5 includes a conventional air-conditioning load loop and a variable temperature air-conditioning load loop wherein the load output temperature is controlled via variable temperature air-conditioning method. The variable temperature air-conditioning load loop further includes the variable temperature air-conditioning load loop at intervals and without intervals. The variable temperature air-conditioning load loop includes variable temperature air-conditioning cycling pipe or heating and cooling cycling pipe 501, wherein heating and cooling cycling pipe includes heating cycling pipe 511 and cooling cycling pipe 512 or other air-conditioning loads.

Referring to Fig. 1 of the drawings, geothermal heat exchanging cycling loop A comprises a geothermal heat exchanging water supply cycling loop 4 and a water-source heat pump loop 2. The underground reservoir supplies water to working water tank 6 through the geothermal heat exchanging water supply cycling loop 4, to the water-source heat pump loop 2, and to the energy-storage water tanks 7 through the heating cycling path switch valve K1 and the refrigerating cycling path switch valve K2 controlled by the controller 8, and the energy-storage water tank input gating switch valves K3-1, K3-2, and K3-3, so as to forming a geothermal heat exchanging cycling loop. Air-conditioning heat exchanging cycling loop C includes a variable temperature air-conditioning load loop 5, electric and manual reversing switch valves, and so on. The energy-storage water tanks output heat and cool energy to variable temperature air-conditioning load loop through the heating cycling path switch valve K1 and the refrigerating cycling path switch valve K2 controlled by the controller 8, and the energy-storage water tank output gating switch valves K3-4, K3-5, and K3-6, so as to forming a air-conditioning heat exchanging cycling loop. The output variable temperature air-conditioning energy includes the variable temperature air-conditioning energy which has intervals and which is constant without intervals.

The working flow and the interrelationship among the respective cycling loops of the variable temperature air-conditioning method using underground reservoir and water-source heat pump with energy-storage and its system are illustrated in Fig. 1. The cycling system includes a geothermal heat exchanging cycling loop A, a paralleled energy-storage water tanks B, and an air-conditioning heat exchanging cycling loop C. Wherein the geothermal heat exchanging cycling loop A includes a geothermal heat exchanging water supply cycling loop 4 and a water-source heat pump loop 2. The geothermal heat exchanging cycling loop A collects heat and cool energy from the underground reservoir and buffers energy in the paralleled energy-storage water tanks B through the geothermal heat exchanging water supply cycling loop 4 and the water-source heat pump loop 2. The air-conditioning heat exchanging cycling loop C includes a variable temperature air-conditioning load loop 5. The air-conditioning heat exchanging cycling loop C collects energy from the paralleled energy-storage water tanks B, and outputs to the variable temperature air-conditioning load loop 5. The geothermal heat exchanging cycling loop A and the air-conditioning heat exchanging cycling loop C can proceed at same time or respectively.

Under the control of the controller 8, the geothermal heat exchanging cycling loop A cycles energy among the energy-storage water tanks and the geothermal heat exchanging water supply cycling loop 4 and the water-source heat pump loop 2. Meanwhile, the air-conditioning heat exchanging cycling loop C cycles energy between the energy-storage water tanks and the variable temperature air-conditioning load. Water-source heat pump and load can connect and switch among the paralleled energy-storage water tanks at the same time or respectively forming energy collecting cycle and releasing cycle, so as to meet the temperature requirement day and night without intervals. When the heating and cooling heat pump need to be maintained, the system won't stop the output to the load due to the energy-storage water tanks. The system preserves a certain mount of heat and cool energy for being output during the maintenance and electrical supply peek periods, so that the system has low operation cost, high energy-storage volume and high system reliability, and can keep constant and even temperature. Further more, the configured power of the heat pump can be reduced, the system investment is lower than the conventional technique, and the system efficiency is higher than the conventional technique.

In winter heating operation mode, the input end of the water-source heat pump loop connects to the working water tank 6, and the geothermal heat exchanging water supply cycling loop 4 cycles energy with the water-source heat pump loop 2 through the working water tank 6. The output end of the water-source heat pump loop 2 connects to the energy-storage water tanks B comprising one or more energy-storage water tanks connected in parallel. Under the control of the controller 8, the energy-storage water tanks can connect and switch to the water-source heat pump, which is to connect and switch the variable temperature air-conditioning heat exchanging cycling loop via the electric and manual reversing switch valves, wherein all the electric switch valves are set up with switch status and parameters according to the operating mode by the controller. At this time, a cycling pump P1 controlling the heat cycling path and the switch valve K1 are connected, a cycling pump P2 controlling the cool cycling path and the switch valve K2 are disconnected, and the energy-storage water tank input gating switch valves K3-1, K3-2, and K3-3 and the energy-storage water tank output gating switch valves K3-4, K3-5, and K3-6 are switched on, so that the energy for the variable temperature air-conditioning system is constantly supplied to the load of the variable temperature air-conditioning load through the switched on energy-storage water tank output gating switch valves K3-4, K3-5, and K3-6, so as to assure the operation of the variable temperature air-conditioning system with energy-storage, and output even temperature.

When a large energy output is needed, the power of selected water-source heat pump can be reduced, due to the reserved energy in the energy-storage water tanks, so that the investment is lowered. Further more, It is avoided that the water-source heat pump is replaced by a large-volume water tank, the final cycling thermal storage medium waits to achieve the required temperature, and water tank is too slow to be heated, which results in unstable temperature output so as to need larger power water-source heat pump, so that the operating efficiency is greatly increased. The reserved energy-storage water tank can output energy when the system is faulty, which improve the system operating reliability.

In summer cooling operation mode, the condensation end and the vaporization end of the water-source heat pump loop 2 can switch with each other by switching the switch valve K1 and K2. At this time, a cycling pump P2 controlling the cool cycling path and the switch valve K2 are connected, a cycling pump P1 controlling the heat cycling path and the switch valve K1 are disconnected, and the energy-storage water tank input gating switch valves K3-1, K3-2, and K3-3 and the energy-storage water tank output gating switch valves K3-4, K3-5, and K3-6 are switched on, so that the energy for the variable temperature air-conditioning system is constantly supplied to the load of the variable temperature air-conditioning load through the switched on energy-storage water tank output gating switch valves K3-4, K3-5, and K3-6, so as to assure the operation of the variable temperature air-conditioning system with energy-storage, and output even cool temperature.

The water-source heat pump can adopts one or more water-source heat pumps, such as electrical water-source heat pump, fuel driven water-source heat pump, gas engine driven water-source heat pump or solid biomass fuel driven water-source heat pump, whose advantages is to choose low-cost fuel and reserve another as backup so as to avoid emergency, and further increase operation security and reliability of the air-conditioning system of agriculture greenhouse.

The energy-storage water tanks B further comprises a heat exchanger. The secondary cycling thermal storage medium 311 of the geothermal heat exchanging cycling loop can be water or water solution containing solid phase-change energy storing material, and the final cycling thermal storage medium 312 of the variable temperature air-conditioning heat exchanging cycling loop can be liquid such as water or alcohols, wherein the liquid can contain water solution containing solid phase-change energy storing material.

During the synchronized constant operating, the operating energy-storage water tanks store the geothermal heat in the geothermal heat exchanging cycling loop, and output cool or heat energy to the variable temperature air-conditioning load in the variable temperature air-conditioning heat exchanging cycling loop, so as to meet the requirement of the simultaneous operating of the geothermal heat exchanging cycling loop and the variable temperature air-conditioning heat exchanging cycling loop, and of the high standard temperature control and high efficiency of the constant variable temperature air-conditioning system output, so as to improve the stability of the output temperature of the variable temperature air-conditioning system for agriculture greenhouse.

During the respective operating at intervals, the energy-storage water tanks can only store the geothermal heat in the geothermal heat exchanging cycling loop, or only output cool or heat energy to the variable temperature air-conditioning load in the variable temperature air-conditioning heat exchanging cycling loop. The electricity energy in valley period can be used for energy-storage that can be used in peek period. Two or more low power water-source heat pump work alternatively for output or energy-storage. Therefore, the backup water-source heat pump can assure the reliability, lower the operating cost and utilization rate, and lower the equipment investment.

The load of the variable temperature air-conditioning load loop, such as heating or cooling cycling pipe 511, 512 can be overhead pipes, which exchange heat or cool through the pipe wall with the room temperature of the farm buildings. Except heating the air, the heating cycling pipes 511 can be paralleled, wherein one or more pipes can be buried in the soil for heating the soil, so as to achieve the heat balance of the air and ground temperature. In summer, when cooling, the manual switch valve of the buried tube can be switched off.

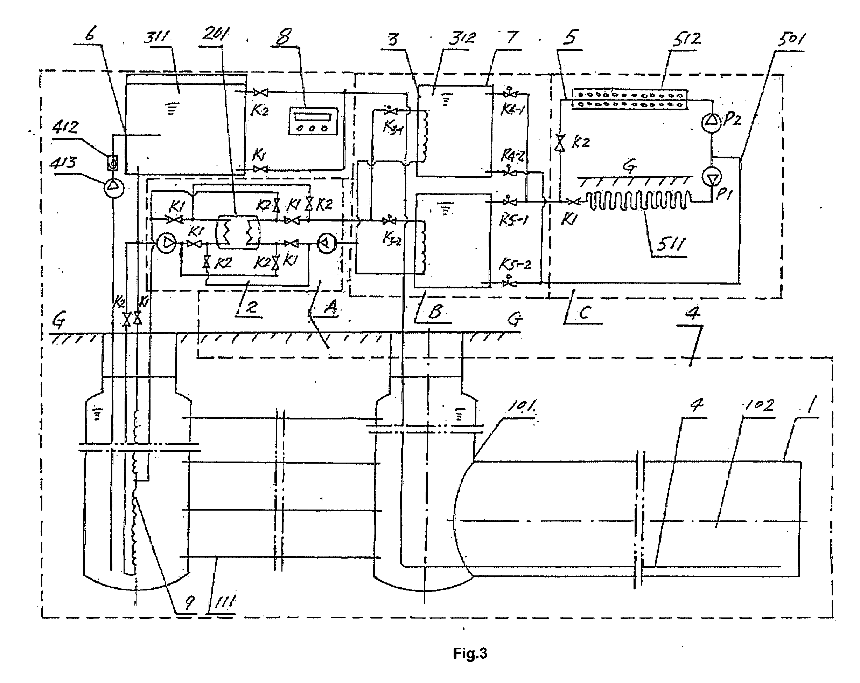

Referring to Figs. 1, 3, 4, and 5 of the drawings, a variable temperature air-conditioning method using underground reservoir and water-source heat pump with energy-storage and its system applied to residential, commercial or industrial buildings of another embodiment are illustrated, in which the system comprises a underground reservoir 1, a water-source heat pump loop 2, a cycling thermal storage medium 3, a geothermal heat exchanging water supply cycling loop 4, an air-conditioning load loop 5, energy-storage water tanks B, a controller 8, a heat absorbing or heat radiating serpentined pipe 9 and electric and manual reversing switch valves. As shown in Fig. 3, 4, and 5, the geothermal heat exchanging water supply cycling loop 4 includes the underground reservoir 1, a water supply pipe 401, a one-way valve 412, a water supply pump 413, a working water tank 6, electric and manual reversing switch valves K1, K2. The variable temperature air-conditioning load loop includes a heating and cooling cycling pipe 501, wherein heating and cooling cycling pipe includes heating cycling pipe 511 and cooling cycling pipe 512. The cycling thermal storage medium 3 includes a secondary cycling thermal storage medium 311 and a final cycling thermal storage medium 312. The underground reservoir 1 includes an underground explosive rigid wall 101, a drilling and pipe jacking underground reservoir 102, a buried connecting pipe 111, an infiltration pipe 112, a maintenance hole 113, a thermal insulation layer 114. The electric and manual switch valves includes a heating cycling path switch valve K1, a cooling cycling path switch valve K2, energy-storage water tank input gating switch valves K3-1, K3-2, energy-storage water tank output gating switch valves K4-1, K4-2, K5-1, and K5-2. Air-conditioning load loop 5 includes a conventional air-conditioning load loop and a variable temperature air-conditioning load loop.

The geothermal heat exchanging cycling loop A comprises a geothermal heat exchanging water supply cycling loop 4 and a water-source heat pump loop 2. The underground reservoir supplies water from the heat absorbing serpentined pipe or the radiating serpentined pipe 9 to the water-source heat pump loop 2 through the geothermal heat exchanging water supply cycling loop 4, and to the energy-storage water tanks 7 through the heating cycling path switch valve K1 and the refrigerating cycling path switch valve K2 controlled by the controller 8, and the energy-storage water tank input gating switch valves K3-1, K3-2, so as to forming a geothermal heat exchanging cycling loop.

Air-conditioning heat exchanging cycling loop C includes a variable temperature air-conditioning load loop 5, electric and manual reversing switch valves K1, K2. The energy-storage water tanks output heat or cool energy to the load of the variable temperature air-conditioning load loop through the heating cycling path switch valve K1 and the cooling cycling path switch valve K2 controlled by the controller 8, and the energy-storage water tank output gating switch valves K4-1, K4-2, K5-1, and K5-2, so as to forming a air-conditioning heat exchanging cycling loop. The output variable temperature air-conditioning energy includes the variable temperature air-conditioning energy which has intervals and which is constant without intervals.

In order to assure the operation of the variable temperature air-conditioning system in the residential, commercial or industrial buildings, indirect variable temperature heating with energy-storage can be adopted by connecting the evaporation end of the water-source heat pump and the heat absorbing pipe of the underground reservoir, or indirect variable temperature cooling with energy-storage can be adopted by connecting the condensation end of the water-source heat pump and the heat radiating pipe of the underground reservoir. Besides, direct variable temperature cooling with energy-storage can be adopted by connecting the working water tank 6 and the cool water transmission pipe of the underground reservoir.

The load of the variable temperature air-conditioning load loop can be a fan-coil unit or heat radiator 511, 512, or heat exchanger such as warm water air-conditioner. Further more, the forgoing heat cycling pipes 511 can be paralleled connected, wherein one or more pipes are buried under the floors in the buildings to radiate heat. In order to keep the even temperature in each room, the variable temperature heating and cooling cycling pipes further comprises a liquid distributor. The secondary cycling thermal storage medium 311 can be water, and the final cycling thermal storage medium 312 can be liquid such as water or alcohols, wherein the liquid can contain water solution containing solid phase-change energy storing material.

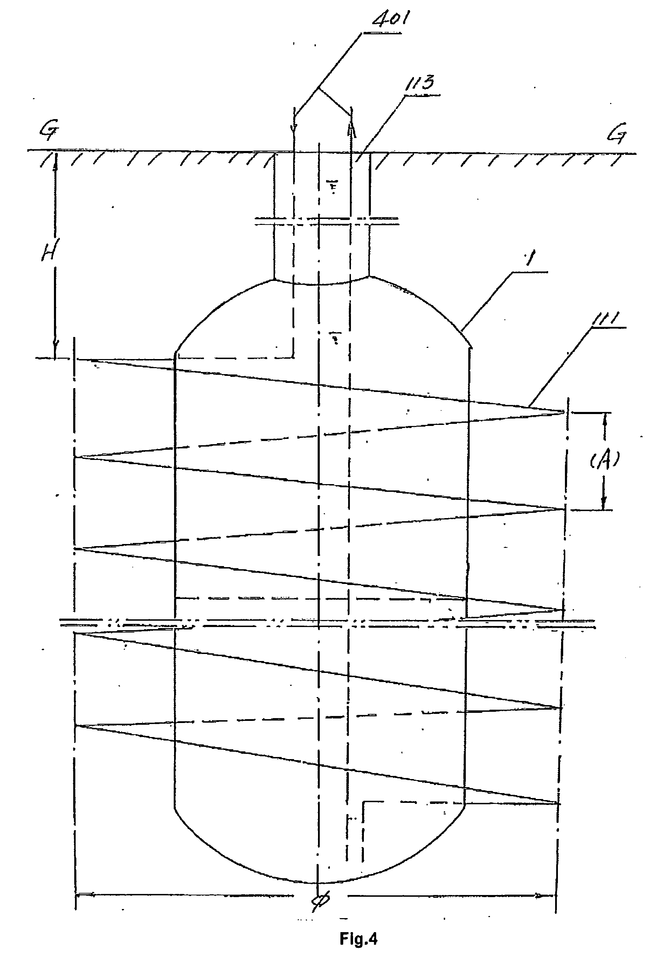

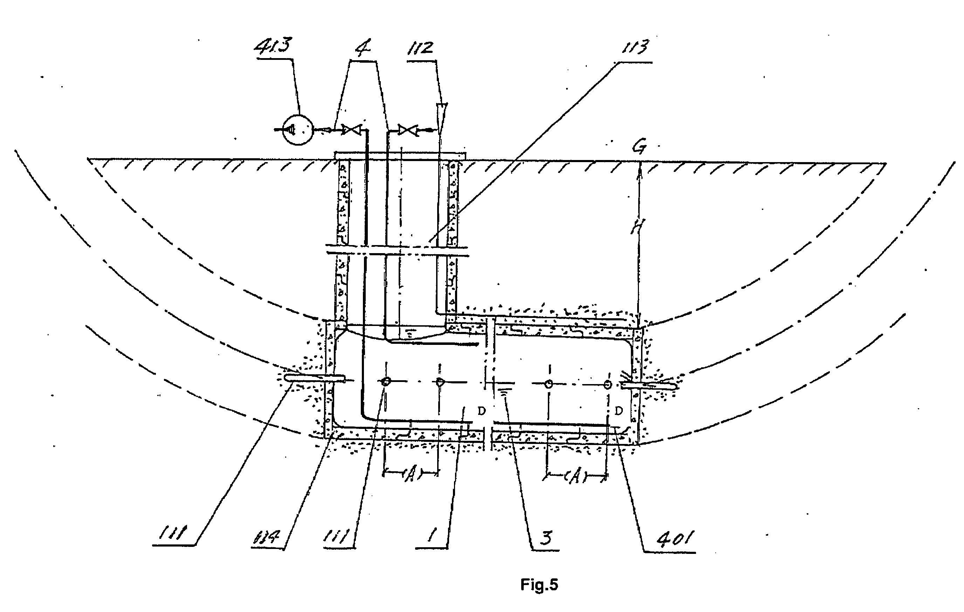

The underground reservoir may comprises one or more underground reservoirs that can be a underground reservoir with underground explosive rigid wall 101 as shown in Fig. 4, which formed by a trenchless explosion, or a trenchless horizontally directional drilling and pipe jacking underground reservoir 102 as shown in Fig. 5, wherein the pipes are installed by horizontally directional drilling and pipe jacking, which is suitable to build a enclosed pipe cavity with a diameter larger than 660 mm. The two of above can be combined. When the pipe of the underground has larger diameter, the underground reservoir may have a maintenance hole 113 for a maintenance worker entering in and out. The buried pipe of the enclosed pipe cavity may be metal pipe, plastic pipe, glass-fiber pipe, pre-made reinforced concrete pipe, or the combination of above. As shown in Fig. 5, the underground reservoir is a combination of the above mentioned two types of underground reservoirs, which are communicated, wherein the first type serves as a maintenance hole which can reduce the working labor. Besides, two types of underground reservoirs can be not communicated directly, but communicated through heat exchanging pipe 111. When the buried pipes are combined by the inner and outer pipe casings, a thermal insulation layer 114 is provided between the inner and outer pipe casings, such as EPS bubble thermal insulation layer, so as to improve the temperature persevering efficiency, and form energy-storage underground reservoir. When adopting steel pipe, the inner and outer surface can be coated with corrosion protective coating.

Soil heat exchanger comprises a underground reservoir and buried heat exchanging pipes 111 communicated with the underground reservoir. The spacing between the adjacent buried heat exchanging pipes D ranges from 1.5 - 6 meters, and preferably 3 - 4 meters, which is determined according to the soil composition and underground humidity. Under general condition, the spacing had better to be 3 meters to achieve higher heat exchanging efficiency.

When the underground energy capacity needs to be expanded, the capacity of the combination type of underground reservoir is easy to be expanded. When adopting transverse trenchless horizontally directional drilling and pipe jacking underground reservoir, more pipes can be configured at spaced-apart multi-layers about 3-8 meters, wherein the pipes at different layers can be parallel or crossing. When the pipes are transverse, vertical pipes can be added to compensate the energy output so as to form three-dimension energy-storage and exchanging space. Vertical buried geothermal heat exchanger includes the disclosure in Chinese patent ZL200520040450.X.

When the underground rock structure under a building is complex, the combination type of underground reservoir is needed to increase the energy capacity and density of the underground reservoir. The preferred depth of the underground reservoir H is a depth from the 5 m under the ground surface to the first water layer, which can get ideal constructing condition, and humanity and heat exchanging efficiency. In addition, holes for receiving buried pipe can be filled with moisture preservation material. When the first water layer is deep, a plurality of spaced apart infiltration pipes 112 can be provided in the heat exchanging area, so as to keep the humidity to improve the heat exchanging efficiency. The underground reservoir is underground beneath the agriculture facility, residential, commercial or industrial buildings including the surrounding area, which does not take up spaces.

One skilled in the art will understand that the embodiment of the present invention as shown in the drawings and described above is exemplary only and not intended to be limited.

It will thus be seen that the objects of the present invention have been fully and effectively accomplished. It embodiments have been shown and described for the purposes of illustrating the functional and structural principles of the present invention and is subject to change without departure from such principles. Therefore, this invention includes all modifications encompassed within scope of the following claims.

## Claims

1. A variable temperature air-conditioning method using underground reservoir (1) and water-source heat pump (201) with energy-storage, the method comprising steps of:
(a) collecting energy from an underground reservoir (1) via a water-source heat pump (201),
(b) buffering cool and warm energy in a plurality of energy-storage water tanks (B) respectively, and
(c) exchanging cool and warm energy between at least one said energy-storage water tank (B) and an air-conditioning load (511, 512).

2. The variable temperature air-conditioning method as recited in claim 1, wherein each energy-storage water tank (7) of said a plurality of energy-storage water tanks (B) circularly exchanges cool and warm energy with an output of the water-source heat pump (201) and a variable temperature air-conditioning load (511, 512), respectively.

3. The variable temperature air-conditioning method as recited in claim 2, wherein the cool and warm energy exchanging between said a plurality of energy-storage water tanks (B) and air-conditioning load (511, 512) is constant without interval.

4. The variable temperature air-conditioning method as recited in claim 1 or 3, wherein step (b) and step (c) are simultaneous or separate.

5. A variable temperature air-conditioning system using underground reservoir (1) and water-source heat pump (201) with energy-storage, characterized the system comprising an underground reservoir (1), a water-source heat pump (201) communicated with said underground reservoir (1), an air-conditioning load (511, 512) communicated with said water-source heat pump (201) **characterized in that** the system further comprises a plurality of energy-storage water tanks (B) that are connected in parallel, in which each energy-storage water tank (B) is communicated with an output end of said water-source heat pump (201) via an input gating switch valve (K3-1, K3-2, K3-3), and communicated with said variable temperature air-conditioning load (511, 512) via an output gating switch valve (K4, K5, K6).

6. The variable temperature air-conditioning system as recited in claim 5, wherein a heat absorbing unit and a heat radiating unit (9) are provided in said underground reservoir (1), which are optionally connected with said water-source heat pump (201).

7. The variable temperature air-conditioning system as recited in claim 6, wherein said underground reservoir (1) is formed by trenchless explosion or comprises buried pipes (102) that are formed by trenchless horizontally directional drilling and pipe jacking.

8. The variable temperature air-conditioning system as recited in claim 7, wherein said buried pipes (102) is embodied as at least one selected from a group consisting of metal pipe, plastic pipe, glass-fiber pipe, and pre-made reinforced concrete pipe.

9. The variable temperature air-conditioning system as recited in claim 7, wherein said buried pipes (102) comprise an inner casing and an outer casing, and a thermal insulation material (114) is provided therebetween.

10. The variable temperature air-conditioning system as recited in claim 7, wherein said underground reservoir (1) comprises multi-layers in a depth direction, and every two adjacent pipe casings have a spacing ranging from 3 to 8 meters.

## Patentansprüche

1. Temperaturvariables Klimatisierungsverfahren unter Verwendung eines unterirdischen Reservoirs (1) und einer Wasser-Wärmepumpe (201) mit einem Energiespeicher, wobei das Verfahren die Schritte aufweist:
(a) Sammeln von Energie von einem unterirdischen Reservoir (1) mittels einer Wasser-Wärmepumpe (201);
(b) Puffern von kalter und warmer Energie in mehreren Energiespeicher-Wassertanks (B); und
(c) Austauschen von kalter und warmer Energie zwischen mindestens einem der Energiespeicher-Wassertanks (B) und einer Klimatisierungslast (511,512).

2. Temperaturvariables Klimatisierungsverfahren nach Anspruch 1, wobei jeder Energiespeicher-Wassertank (7) der mehreren Energiespeicher-Wassertanks (B) kalte und warme Energie mit einem Ausgang der Wasser-Wärmepumpe (201) bzw. einer temperaturvariablen Klimatisierungslast (512, 512) zyklisch austauscht.

3. Temperaturvariables Klimatisierungsverfahren nach Anspruch 2, wobei der Austausch von kalter und warmer Energie zwischen den mehreren Energiespeicher-Wassertanks (B) und der Klimatisierungslast (511, 512) stetig und ohne Intervall erfolgt.

4. Temperaturvariables Klimatisierungsverfahren nach Anspruch 1 oder 3, wobei die Schritte (b) und (c) gleichzeitig oder getrennt ausgeführt werden.

5. Temperaturvariables Klimatisierungssystem unter Verwendung eines unterirdischen Reservoirs (1) und einer Wasser-Wärmepumpe (201) mit einem Energiespeicher, wobei das System ein unterirdisches Reservoir (1), eine mit dem unterirdischen Reservoir (1) kommunizierende Wasser-Wärmepumpe (201) und eine mit der Wasser-Wärmepumpe (201) kommunizierende Klimatisierungslast (511, 512) aufweist;
**dadurch gekennzeichnet, dass** das System ferner aufweist:
mehrere parallel geschaltete Energiespeicher-Wassertanks (B), wobei jeder Energiespeicher-Wassertank (B) über ein einlassseitiges Absperrschaltventil (K3-1, K3-2, K3-3) mit einem Auslassende der Wasser-Wärmepumpe (201) und über ein auslassseitiges Absperrschaltventil (K4, K5, K6) mit der temperaturvariablen Klimatisierungslast (511, 512) kommuniziert.

6. Temperaturvariables Klimatisierungssystem nach Anspruch 5, wobei im unterirdischen Reservoir (1) eine Wärmeabsorptionseinheit und eine Wärmestrahlungseinheit (9) angeordnet sind, die optional mit der Wasser-Wärmepumpe (201) verbunden sind.

7. Temperaturvariables Klimatisierungssystem nach Anspruch 6, wobei das unterirdische Reservoir (1) durch grabenlose Explosion ausgebildet ist oder unterirdische Rohre (102) aufweist, die durch grabenloses horizontales Richtungsbohren und Rohrdurchpressen verlegt werden.

8. Temperaturvariables Klimatisierungssystem nach Anspruch 7, wobei die unterirdisch verlegten Rohre (102) ausgeführt sind als wenigstens eines ausgewählt aus der Gruppe bestehend aus Metallrohren, Kunststoffrohren, Glasfaserrohren und vorgefertigten Stahlbetonrohren.

9. Temperaturvariables Klimatisierungssystem nach Anspruch 7, wobei die unterirdisch verlegten Rohre (102) ein Innengehäuse und ein Außengehäuse und ein dazwischen angeordnetes wärmeisolierendes Material (114) aufweisen.

10. Temperaturvariables Klimatisierungssystem nach Anspruch 7, wobei das unterirdische Reservoir (1) mehrere Schichten in einer Tiefenrichtung aufweist, und wobei jeweils zwei benachbarte Rohrgehäuse einen Abstand von 3 bis 8 Meter haben.

## Revendications

1. Procédé de climatisation à température variable utilisant un réservoir souterrain (1) et une pompe à chaleur sur boucle d'eau (201) avec stockage d'énergie, le procédé comprenant les étapes :
(a) de collecte d'énergie à partir d'un réservoir souterrain (1) par l'intermédiaire d'une pompe à chaleur sur boucle d'eau (201),
(b) de stockage d'énergie froide et chaude dans une pluralité de réservoirs d'eau de stockage d'énergie (B), respectivement, et
(c) d'échange d'énergie froide et chaude entre au moins un dit réservoir d'eau de stockage d'énergie (B) et une charge de climatisation (511, 512).

2. Procédé de climatisation à température variable selon la revendication 1, dans lequel chaque réservoir d'eau de stockage d'énergie (7) de ladite pluralité de réservoirs d'eau de stockage d'énergie (B) échange de manière circulaire de l'énergie froide et chaude avec une sortie de la pompe à chaleur sur boucle d'eau (201) et une charge de climatisation à température variable (511, 512), respectivement.

3. Procédé de climatisation à température variable selon la revendication 2, dans lequel l'échange d'énergie froide et chaude entre ladite pluralité de réservoirs d'eau de stockage d'énergie (B) et une charge de climatisation (511, 512) est constant sans intervalle.

4. Procédé de climatisation à température variable selon la revendication 1 ou 3, dans lequel l'étape (b) et l'étape (c) sont simultanées ou séparées.

5. Système de climatisation à température variable utilisant un réservoir souterrain (1) et une pompe à chaleur sur boucle d'eau (201) avec stockage d'énergie, le système comprenant un réservoir souterrain (1), une pompe à chaleur sur boucle d'eau (201) en communication avec ledit réservoir souterrain (1), une charge de climatisation (511, 512) en communication avec ladite pompe à chaleur sur boucle d'eau (201), **caractérisé en ce que** le système comprend en outre une pluralité de réservoirs d'eau de stockage d'énergie (B) qui sont reliés en parallèle, dans lequel chaque réservoir d'eau de stockage d'énergie (B) est en communication avec une extrémité de sortie de ladite pompe à chaleur sur boucle d'eau (201) par l'intermédiaire d'une vanne de commutation de commande d'entrée (K3-1, K3-2, K3-3), et en communication avec ladite charge de climatisation à température variable (511, 512) par l'intermédiaire d'une vanne de commutation de commande de sortie (K4, K5, K6).

6. Système de climatisation à température variable selon la revendication 5, dans lequel une unité d'absorption de chaleur et une unité de rayonnement de chaleur (9) sont prévues dans ledit réservoir souterrain (1), qui sont reliées optionnellement à ladite pompe à chaleur sur boucle d'eau (201).

7. Système de climatisation à température variable selon la revendication 6, dans lequel ledit réservoir souterrain (1) est formé par une explosion sans tranchée ou comprend des tuyaux enterrés (102) qui sont formés par forage dirigé horizontalement sans tranchée et fonçage de tuyaux.

8. Système de climatisation à température variable selon la revendication 7, dans lequel lesdits tuyaux enterrés (102) sont réalisés en tant qu'au moins l'un sélectionné dans un groupe consistant en un tuyau en métal, un tuyau en plastique, un tuyau en fibre de verre et un tuyau en béton renforcé préfabriqué.

9. Système de climatisation à température variable selon la revendication 7, dans lequel lesdits tuyaux enterrés (102) comprennent une enveloppe interne et une enveloppe externe, et un matériau thermiquement isolant (114) est prévu entre elles.

10. système de climatisation à température variable selon la revendication 7, dans lequel ledit réservoir souterrain (1) comprend de multiples couches dans une direction de profondeur, et toutes les enveloppes de deux tuyaux adjacents ont un espacement allant de 3 à 8 mètres.
